# EUROPÄISCHE PATENTSCHRIFT

(11) **EP 1 097 318 B1**
(45) Veröffentlichungstag und Bekanntmachung des Hinweises auf die Patenterteilung: **12.12.2001**
(21) Anmeldenummer: 99939983.5
(22) Anmeldetag: 03.07.1999
(51) Int. Cl.: F16H 47/04, F16H 61/46

(54) **VERFAHREN UND VORRICHTUNG ZUR STEUERUNG EINES KRAFTFAHRZEUG-ANTRIEBSSTRANGES**
METHOD AND DEVICE FOR CONTROLLING A MOTOR VEHICLE DRIVE TRAIN
PROCEDE ET DISPOSITIF SERVANT A COMMANDER LE MECANISME DE TRANSMISSION D'UN VEHICULE AUTOMOBILE

(30) Priorität: 10.07.1998 DE 19830953
(43) Veröffentlichungstag der Anmeldung: 09.05.2001
(73) Patentinhaber: ZF FRIEDRICHSHAFEN Aktiengesellschaft, 88038 Friedrichshafen (DE)
(72) Erfinder: GOEBEL, Christoph, D-88090 Immenstaad (DE); SPIESS, Martin, D-88690 Uhldingen (DE); PROBST, Willibald, D-88239 Wangen (DE)
(86) Internationale Anmeldenummer: EP9904639
(87) Internationale Veröffentlichungsnummer: WO0003160

(56) Entgegenhaltungen:
- WO-A-97/01049
- DE-A- 19 642 503
- US-A- 4 082 013
- US-A- 5 529 546

## Beschreibung

Die Erfindung betrifft ein Verfahren und eine Vorrichtung zur Steuerung eines Kraftfahrzeug-Antriebsstranges.

Aus der WO 97/01049 ist ein hydrostatisch-mechanisches Leistungsverzweigungsgetriebe bekannt, dessen Übersetzung stufenlos variierbar ist ohne Unterbrechung der Zugkraft oder der Schubkraft (Lastschaltgetriebe). Ein mechanischer Leistungszweig und ein hydrostatischer Leistungszweig werden von einer gemeinsamen Antriebswelle angetrieben und in einem Kuppelgetriebe summiert. Das Kuppelgetriebe enthält mehrere Planetenradsätze. Der Abtrieb des Planetengetriebes ist mit einem Wendegetriebe verbunden und kann wahlweise über Kupplung Kᵥ für Vorwärtsfahrt oder Kupplung K_{R} für Rückwärtsfahrt und ein Wendegetriebe mit der Abtriebswelle verbunden werden. Mit diesem bekannten Leistungsverzweigungsgetriebe kann ein Kraftfahrzeug bei kleinen Geschwindigkeiten über die Kupplungen K_{V} und K_{R} reversiert werden, d. h. seine Fahrtrichtung umgekehrt werden. Das bedeutet beispielsweise, daß die Kupplung K_{R} bereits druckmoduliert geschlossen wird, wenn sich das Fahrzeug noch vorwärts bewegt. Ab einem bestimmten Modulationsdruck wird die bisher geschlossene Kupplung K_{V} geöffnet und das sich vorwärts bewegende Fahrzeug über die Kupplung K_{R} bis zum Stillstand abgebremst und anschließend in Rückwärtsfahrtrichtung beschleunigt. Die aktuell eingestellte Getriebeübersetzung bleibt während des Reversiervorganges konstant. Sie wird erst wieder verändert, nachdem die Reversierung über die Kupplungen K_{V}/K_{R} abgeschlossen ist. Dadurch sind schnelle Fahrtrichtungs-Umkehrungen (Reversierungen) ohne Zugkraftunterbrechung mit gutem Schaltkomfort erzielbar.

Durch die Erfindung soll die Aufgabe gelöst werden, bei einem Kraftfahrzeug-Antriebsstrang, welcher eine Transmission mit stufenlos variabler Übersetzung und umschaltbare Kupplungen zur Reversierung der Fahrtrichtung aufweist, eine Möglichkeit zu schaffen, durch welche bei höheren Fahrgeschwindigkeiten als beim Stand der Technik eine Fahrtrichtungs-Umkehr automatisch gestartet werden kann, nachdem ein Fahrer an einer Steuereinrichtung eine solche Fahrtrichtungs-Umkehrung gewählt hat, ohne daß die Kupplungen schneller verschleißen oder zerstört werden oder wesentlich größere Kupplungen oder eine größere Transmission als beim Stand der Technik erforderlich sind. Ferner soll ein ruckfreier Fahrbetrieb auch während der Fahrtrichtungs-Reversierung gewährleistet werden.

Diese Aufgabe wird gemäß der Erfindung durch die Merkmale von Anspruch 1 und von Anspruch 7 gelöst.

Die Erfindung wird im folgenden mit Bezug auf die Zeichnungen anhand einer bevorzugten Ausführungsform als Beispiel beschrieben. In den Zeichnungen zeigen:

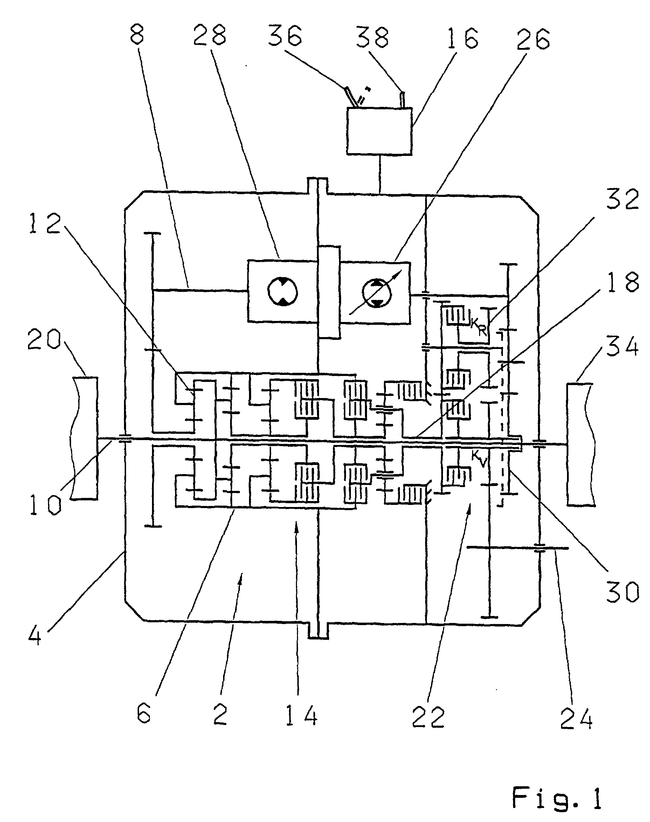

- Fig. 1: schematisch einen Kraftfahrzeug-Antriebsstrang nach der Art, wie er aus der WO 97/01049 bekannt ist und eine elektronische Steuereinrichtung nach der Erfindung, wobei der Antriebsstrang eine Transmission mit stufenlos variabler Übersetzung zur Fahrtrichtungs-Reversierung (Umkehr der Abtriebs-Drehrichtung) aufweist;

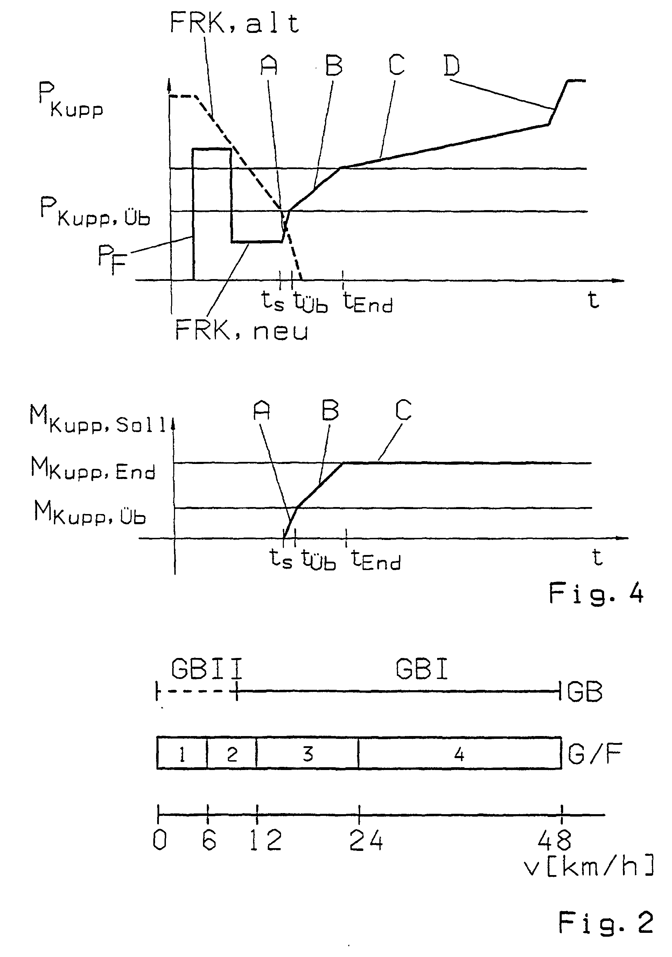

- Fig. 2: eine Übersicht über Fahrzeuggeschwindigkeiten (korrespondiert zur Abtriebsdrehzahl der Transmission), zugehörige Fahrbereiche oder Gänge der Transmission mit stufenlos variabler Übersetzung und zugehörige Geschwindigkeitsbereiche, welche für eine Fahrtrichtungs-Reversierung relevant sind, wobei in einem ersten Geschwindigkeitsbereich GB I, welcher beispielsweise oberhalb von einer Fahrzeuggeschwindigkeit von 10 km/h liegt, ein Reversieren der Fahrtrichtung durch Hochschaltungen oder Rückschaltungen der Fahrbereiche (oder Gänge) der Transmission eingeleitet wird, und in einem zweiten Geschwindigkeitsbereich GB II die Fahrtrichtungs-Reversierung durch Reibungs-Schlupfbetrieb der Fahrtrichtungs-Kupplungen durchgeführt wird (Power-Reversieren);

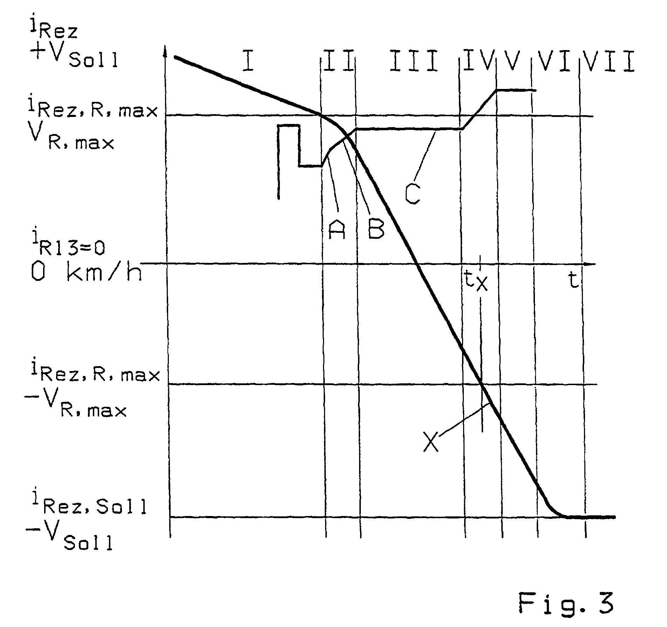

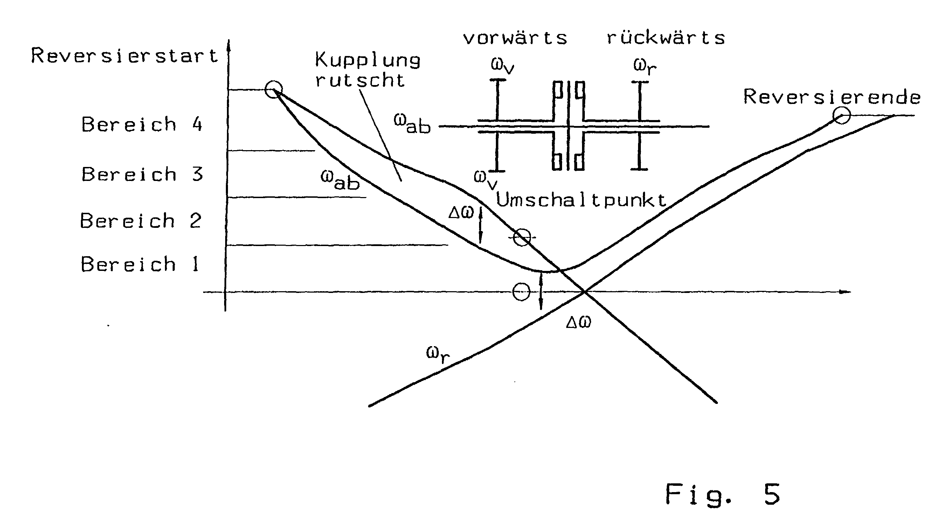

- Fig. 3: ein Diagramm der Fahrzeug-Sollgeschwindigkeit und des ihr entsprechenden reziproken Wertes der stufenlos variablen Übersetzung der Transmission in Abhängigkeit von der Zeit, wobei oberhalb der Fahrgeschwindigkeit 0 km/h die Fahrgeschwindigkeit in der ursprünglichen Fahrtrichtung und unterhalb der Geschwindigkeit 0 km/h die Fahrgeschwindigkeit in der neuen Fahrtrichtung dargestellt ist, wobei der Reversiervorgang entlang der Zeitachse in Reversierbereiche oder Reversierzeitabschnitte I, II, III, IV, V, VI und VII eingeteilt ist und zusätzlich der Kupplungsdruck der Kupplung der neuen Fahrtrichtung von Fig. 4 zeitlich eingeordnet ist;
- Fig. 4: ein oberes Diagramm mit parametrierbaren Kupplungs-Ansteuerungskennlinien der Kupplungsschließdrücke über der Zeit, wobei in strichpunktierter Linie der Kupplungsdruck der alten Kupplung K_{V} (Kupplung der alten Fahrtrichtung) und in ausgezogener Linie der Kupplungsdruck der neuen Kupplung K_{R} (Kupplung der neuen Fahrtrichtung) dargestellt ist, und ein unteres Diagramm, welches die übertragenen Drehmomente der neuen Kupplung in Abhängigkeit von der Zeit und in Abhängigkeit vom Schließdruck der alten Kupplung Kᵥ zeigt;
- Fig. 5: einen Reversiervorgang, bei dem mit dem Punkt Reversierstart der Beginn des Reversiervorganges und mit dem Punkt Reversierende das Ende des Reversiervorganges dargestellt ist. Die Linie ω_{ab} stellt die Abtriebsdrehzahl der Kupplungswelle dar, ω_{V} die Drehzahl der Vorwärtsfahrt-Kupplung, ω_{R} die Drehzahl der Rückwärtsfahrt-Kupplung und Δω die Drehzahldifferenz zwischen der Abtriebswelle und der Antriebswelle. Nach dem Reversier-Start beginnt die Vorwärtsfahrt-Kupplung zu rutschen, bis sie unterhalb des Bereiches eins ganz geöffnet ist, die Rückwärtsfahrt-Kupplung beginnt mit dem Reversier-Start zu schließen, bis sie beim Reversier-Ende ganz geschlossen ist.

Die in Fig. 1 dargestellte Transmission mit stufenlos variabler Übersetzung ist ein hydrostatisch-mechanisches Leistungsverzweigungs- und Leistungssummierungsgetriebe 2 in einem Gehäuse 4. Es enthält einen mechanischen Leistungszweig 6 und einen hydrostatischen Leistungszweig 8. Sie werden beide von einer Haupt-Antriebswelle 10 angetrieben und ihre Ausgänge werden über einen Planetenradsatz 12 summiert, der Teil eines Schaltgetriebes 14 mit mehreren automatisch lastschaltbaren Gängen ist.

Der hydrostatische Leistungszweig 8 enthält in Antriebsrichtung nacheinander eine verstellbare Hydrostatikpumpe 26 und einen Hydrostatikmotor 28, wie dies aus der WO 97/01049 bekannt ist.

Das Schaltgetriebe 14 und der Hydrostatikmotor 28 werden von einer elektronischen Steuereinrichtung 16 gesteuert und/oder geregelt, um die Übersetzung der Transmission 2 ohne Zugkraftunterbrechung zu verändern, entweder im Sinne einer höheren Fahrzeuggeschwindigkeit hochzuschalten oder im Sinne einer niedrigeren Fahrzeuggeschwindigkeit zurückzuschalten. Das Schaltgetriebe 14 kann entsprechend dem mechanischen Antriebszweig ausgebildet sein, wie er aus der WO 97/01049 bekannt ist oder in anderer Weise. Die Kombination aus Schaltgetriebe 14 und Hydrostatikeinheit 26, 28 kann durch eine andere Anordnung ersetzt werden, die eine stufenlos variable Übersetzung hat, beispielsweise durch einen endlosen Antriebsriemen, welcher zwischen Rädern oder Rollen verstellbar ist, die verschiedene Durchmesser haben. Aus diesem Grunde wird das Getriebe 2 im folgenden auch "Transmission" genannt.

Die Haupt-Antriebswelle 10 wird an ihrem einen Ende außerhalb des Gehäuses 4 von einem Motor 20 angetrieben. Eine Abtriebswelle 18 der Transmission 2 ist über ein Wendegetriebe 22 wahlweise durch Schließen einer Vorwärtsfahrt-Kupplung Kᵥ oder einer Rückwärtsfahrt-Kupplung K_{R} mit einer Haupt-Abtriebswelle 24 verbindbar, um diese in der einen oder anderen Drehrichtung anzutreiben. Das Wendegetriebe 22 enthält einen Getriebezweig 30 mit der Vorwärtsfahrt-Kupplung Kᵥ für Vorwärtsfahrt und einen Getriebezweig 32 gleicher oder unterschiedlicher Übersetzung, jedoch mit einer anderen Anzahl von Zahnrädern und mit der Rückwärtsfahrt-Kupplung K_{R} für Rückwärtsfahrt. Die Kupplungen Kᵥ und K_{R} und das Wendegetriebe 22 können Teile der Transmission 2 sein, anstelle von separaten Teilen. Das Wendegetriebe 22 kann schaltbare Gänge aufweisen.

An die Haupt-Antriebswelle 10 können auf der vom Motor 20 abgewandten Seite des Gehäuses 4 weitere von ihr angetriebene Aggregate 34 (Power Take Off, PTO) angeschlossen werden, wie dies schematisch dargestellt ist.

Ein Fahrer kann an einem Wählelement 36 der elektronischen Steuereinrichtung 16 jeweils Vorwärtsfahrt oder Rückwärtsfahrt des Kraftfahrzeuges wählen.

Die Steuereinrichtung 16 ist derart ausgebildet, vorzugsweise durch ein in ihr enthaltenes festes oder variables Programm, daß sie nach dem Wählen einer Fahrtrichtungs-Reversierung durch eine Person bei einer Fahrzeuggeschwindigkeit oberhalb einer vorbestimmten Grenzgeschwindigkeit von beispielsweise 10 km/h folgende Verfahrensschritte je automatisch ausführt:
1.1. Reduzieren der Fahrgeschwindigkeit durch stufenlos geregeltes und gesteuertes Herunterschalten der Übersetzung der Transmission auf eine niedrigere Fahrgeschwindigkeit;
1.2. bei Erreichen oder Unterschreiten der Grenzgeschwindigkeit wird automatisch die bisher geöffnete Kupplung der neuen Fahrtrichtung druckmoduliert in Reibschlupf gebracht und, sich mit diesem Reibschlupfbetrieb zeitlich überschneidend, wird die schlupffrei geschlossene Kupplung der vorhergehenden Fahrtrichtung durch Schließdruckreduzierung ebenfalls in Reibschlupfbetrieb gebracht, so daß das Antriebsdrehmoment unterbrechungsfrei von der alten Kupplung auf die neue Kupplung übertragen wird. Die Reibleistung der alten Fahrtrichtungs-Kupplung kann genutzt werden, um ein zusätzliches Bremsmoment zur Bremsleistung des Motors zu erzeugen. Es besteht die Möglichkeit, daß die Kupplung der vorhergehenden Fahrtrichtung in Reibschlupfbetrieb gebracht wird, die neue Fahrtrichtungs-Kupplung erst dann in Reibschlupfbetrieb gebracht wird, wenn die Grenzgeschwindigkeit erreicht ist, um eine zu hohe thermische Belastung zu vermeiden. Der Reibschlupfzustand der alten Fahrtkupplung wird so lange beibehalten, bis eine ausreichend geringe Fahrgeschwindigkeit des Fahrzeugs erreicht wurde, daß die weitere Verzögerung von der neuen Fahrtrichtungs-Kupplung übernommen werden kann.
   An diesem Umschaltpunkt wird der bekannte Kupplungsdruck der alten Kupplung dazu benutzt, den Kupplungsdruck der neuen Fahrtrichtungs-Kupplung zu bestimmen und ruckfrei umzuschalten;
1.3. nach vollständigem Öffnen der alten Kupplung, so daß sie keinen Reibschlupf mehr hat, wird automatisch der Reibschlupfbetrieb der Kupplung der neuen Fahrtrichtung so lange beibehalten, bis dadurch das Fahrzeug auf Stillstand abgebremst und in die neue Fahrtrichtung so weit beschleunigt, bis die angetriebene Seite und die abgetriebene Seite der Kupplung der neuen Fahrtrichtung Synchronlauf erreicht haben;
1.4. nach Erreichen des Synchronlaufes der treibenden Kupplungsseite und der getriebenen Kupplungsseite der neuen Fahrtrichtung den Schließdruck dieser neuen Kupplung bis zum Systemdruck erhöhen, bei welchem kein Schlupfbetrieb in dieser Kupplung mehr auftreten kann;
1.5. daß die Steuereinrichtung den ersten Verfahrensschritt 1.1. automatisch überspringt und zum zweiten Verfahrensschritt 1.2. geht, wenn bei Wahl einer Fahrtrichtungs-Reversierung die Fahrzeuggeschwindigkeit bei oder unter der Grenzgeschwindigkeit liegt.

Vorzugsweise wird während des Reversiervorganges, solange die neue und/oder die alte Kupplung Kᵥ oder K_{R} mit Reibschlupf arbeitet, die Übersetzung der Transmission 2 konstant gehalten.

Damit die Kupplung Kᵥ oder K_{R} der neuen Fahrtrichtung rechtzeitig mit Reibschlupf arbeiten kann, wird sie vorzugsweise bereits während des Verfahrensschrittes 1.1 mit Betätigungsflüssigkeit gefüllt.

Damit die Kupplung K_{R} oder K_{V} der alten Fahrtrichtung zu einem genau bestimmbaren Betriebszeitpunkt der neuen Kupplung K_{R} oder K_{V} von der vollständig geschlossenen Betriebsstellung in Reibschlupfbetrieb gebracht werden kann, wird der Schließdruck der alten Kupplung K_{V} oder K_{R} automatisch bereits dann reduziert, wenn während des Verfahrensschrittes 1.1. die Transmission 2 auf eine niedrigere Fahrzeuggeschwindigkeit herunter geschaltet wird.
Im folgenden werden Details der Erfindung beschrieben:

### 1. Anforderungen und relevante Geschwindigkeitsbereiche

Die Erfindung ermöglicht im Gegensatz zum bekannten Stand der Technik eine Reversierung aus entscheidend höheren Fahrgeschwindigkeiten als einer Grenzgeschwindigkeit V_{R,max} von beispielsweise 10 km/h, ohne die Reibkupplungen für solche Belastungen auslegen zu müssen. Dazu wird die im folgenden beschriebene Strategie beispielsweise in drei Phasen unterteilt, denen zwei Geschwindigkeitsbereiche zugeordnet sind:
a) Geschwindigkeitsbereich I betreffend eine Fahrzeuggeschwindigkeit oberhalb einer maximalen Grenzgeschwindigkeit V_{R,max} bzw. oberhalb einer Motor-Grenzdrehzahl. Da die Kupplungen Kᵥ und K_{R} nicht für so hohe Reversiergeschwindigkeiten ausgelegt sind, erfolgt eine Rückschaltung der Übersetzung der Transmission 2 von der aktuellen Übersetzung in diejenige niedrigere Übersetzung, bei welcher die Grenzgeschwindigkeit v_{R,max} bei einer vorbestimmten Motordrehzahl ωₘₒₜ erreicht wird. Der erforderliche Fahrbereich oder Gang der Transmission 2 ist abhängig von der Motordrehzahl (üblicherweise Fahrbereich 2 oder 3; siehe Fig. 2). Ein etwaiger Fahrereingriff über das Gaspedal (Erhöhung der Motordrehzahl; erforderlich z. B. für einen Nebenabtrieb 34) darf in der Verzögerungsphase des Fahrzeuges nicht zu einer Beschleunigung des Fahrzeuges führen.
b) Geschwindigkeitsbereich II betreffend eine Fahrzeuggeschwindigkeit bei oder unterhalb der Grenzgeschwindigkeit V_{R,max} bzw. einer maximalen Motordrehzahl ωₘₐₓ:
   Unterhalb dieser Grenzgeschwindigkeit V_{R,max} wird die resultierende Übersetzung der Transmission 2 konstant gehalten oder zur Minimierung der Reibleistung nachgeführt und die Power-Reversierung ausschließlich über die Fahrtrichtungs-Kupplungen Kᵥ und K_{R} vorgenommen. Dabei wird ein komfortabler Übergang der Verzögerung oder der Beschleunigung zwischen den Geschwindigkeitsbereichen angestrebt.
c) Geschwindigkeitsbereich I in entgegengesetzter Fahrtrichtung mit einer Fahrzeuggeschwindigkeit oberhalb der Grenzgeschwindigkeit V_{R,max} bzw. der Motor-Soll-Drehzahl ωₘₐₓ des Motors:
   Das Fahrzeug muß bis zur aktuellen Geschwindigkeitsvorgabe bzw. Soll-Geschwindigkeit v_{Soll} in der neuen Fahrtrichtung beschleunigt werden (Zughochschaltung; die Transmission 2 wird geschaltet, während der Motor das Fahrzeug beschleunigt).

Bei der Reversierung sind folgende Aspekte zu berücksichtigen:
a) Durch die Reversierung darf der Motor 16 nicht unzulässig gedrückt bzw. gedrosselt werden.
b) Bei der Verzögerung des Fahrzeuges im Schubbetrieb (Fahrzeug schiebt den Motor) darf die maximal zulässige Motordrehzahl nicht überschritten werden.
c) Das Fahrzeug soll während der Fahrtrichtungs-Reversierung eine gleichmäßige, vom Fahrer vorgegebene, Verzögerung oder Beschleunigung einhalten.
d) Es soll ein ruckfreier Reversiervorgang gewährleistet werden, insbesondere an den Übergängen zur und von der Power-Reversierung (Reibungs-Schlupfbetrieb der Kupplungen Kᵥ und/oder K_{R}).

### 2. Eingriffsmöglichkeiten des Fahrers

Der Fahrer soll über verschiedene Möglichkeiten zur Beeinflussung des Reversiervorganges verfügen:
a) Kupplung:
   Das Kupplungspedal begrenzt den Druck an der zuzuschaltenden Kupplung Kᵥ oder K_{R} der neuen Fahrtrichtung (Inchfunktion). Dadurch kann der Reversiervorgang verlangsamt und folglich mit geringerer Verzögerung oder Beschleunigung gestaltet werden.
   Bremse:
   Durch Betätigen der Bremse kann der Verzögerungsvorgang des Fahrzeuges beim Power-Reversieren beschleunigt und der Beschleunigungsvorgang im Geschwindigkeitsbereich II verzögert werden.
   Gas:
   Während einer Verzögerung der Fahrzeuggeschwindigkeit durch kontinuierliche Verstellung der Übersetzung der Transmission 2 wird eine vom Fahrer gewünschte, am Gaspedal eingestellte Drehzahlerhöhung durch den Hydrostaten 26, 28 aufgefangen. Jedoch läuft die Power-Reversierung (Fahrtrichtungs-Reversierung durch Reibungs-Schlupfbetrieb der Kupplungen K_{V} und/oder K_{R}) schneller ab, wenn der Fahrer am Gaspedal mehr Gas gibt.
b) Übersetzungseinstellung:
   Die Steuereinrichtung 16 kann ein Übersetzungs-Einstellelement 38 aufweisen, mit welchem vom Fahrer eine Soll-Übersetzung der Transmission 2 eingestellt werden kann. Mit der manuellen Einstellung einer Soll-Übersetzung wird eine automatische Übersetzungs-Veränderung ausgeschaltet. Wenn das Übersetzungs-Einstellelement 38 nach dem Einstellen eines Reversierbefehls am Fahrtrichtungs-Wählelement betätigt wird, dann gilt die neue Übersetzungsvorgabe bzw. der neue Übersetzungs-Sollwert nur für die neue Fahrtrichtung.

### 3. Übersicht der Fahr- und Reversierbereiche

In Fig. 2 ist die Zuordnung zwischen den beiden Geschwindigkeitsbereichen GB I und GB II, den entsprechenden Fahrbereichen oder Gängen der Transmission 2 sowie den Fahrzeuggeschwindigkeiten bis zu einer maximalen Fahrzeuggeschwindigkeit von V_{R,max} = 48 km/h für eine Motordrehzahl von beispielsweise 2 300 U/min dargestellt. Bei niedrigen Motordrehzahlen kann neben den Fahrbereichen 1 und 2 auch eine Power-Reversierung im Fahrbereich 3 stattfinden. In Fig. 2 ist die Zeile der Gänge oder Fahrbereiche mit G/F bezeichnet. Die Linie der Geschwindigkeitsbereiche ist mit GB bezeichnet. Im Geschwindigkeitsbereich GB I erfolgt eine Fahrtrichtungs-Reversierung durch Rückschalten oder Hochschalten der Transmission 2. Im Geschwindigkeitsbereich GB II findet das Power-Reversieren statt.

### 4. Prinzipieller Ablauf des Reversierverfahrens

### 4.1. Verzögerung über Schubrückschaltung/Zugrückschaltung (Geschwindigkeitsbereich I).

Im Geschwindigkeitsbereich I (Fahrzeuggeschwindigkeit v größer als Grenzgeschwindigkeit V_{R,max}) wird das Fahrzeug zunächst durch automatische und stetige Verstellung der Getriebeübersetzung der Transmission 2 verzögert. Der Motor befindet sich dabei im Schubbetrieb oder Zugbetrieb. Die Motordrehzahl wird bezüglich seiner maximal zulässigen Drehzahl automatisch überwacht. Bei Erreichen eines Grenzwertes wird der Sollwert für die Getriebeübersetzung automatisch entsprechend angepaßt.

Bei einer vom Fahrer vorgegebenen Beschleunigung, beispielsweise durch stärkeres Gasgeben, wird die Sollwertvorgabe für die Übersetzung der Transmission 2 (Anpassung der Steigung des Sollwertes) automatisch modifiziert.

### 4.2. Power-Reversierung über die Fahrtrichtungs-Kupplungen K_{V} und K_{R} (Geschwindigkeitsbereich II).

Reaktionen auf Fahrereingriff:
Der Fahrer kann durch Betätigen der Kupplung, Bremse, Gaspedal, manuelle Verstellung der Übersetzung der Transmission 2 oder durch ein Beschleunigungs-Wählelement den Reversiervorgang beeinflussen.

### 5. Detaillierter Ablauf des Reversiervorganges

Fig. 3 zeigt den Ablauf des Reversiervorganges anhand eines Diagrammes, in welchem auf einer horizontalen Achse die Zeit t und auf einer vertikalen Achse die Fahrzeuggeschwindigkeit v in beiden Fahrzeugrichtungen aufgetragen sind, wobei die Fahrzeuggeschwindigkeit über den Reziprokwert i_{Rez} der Übersetzung der Transmission 2 und über die Motordrehzahl umgerechnet wird. Der Begriff Übersetzung wird deshalb im folgenden stellvertretend für die reziproke Übersetzung verwendet. Der Plusbereich ist die eine Fahrzeugrichtung, beispielsweise Vorwärtsfahrt, und der Minusbereich ist die andere Fahrtrichtung, beispielsweise Rückwärtsfahrt. Es bedeuten i_{Rez} der Reziprokwert der Übersetzung der Transmission 2 (unter Vernachlässigung einer möglichen festen oder schaltbaren Übersetzung im Wendegetriebe 22);
i_{Rez,R,max} der motordrehzahlabhängige Maximalwert des reziproken Wertes, bei und unterhalb welchem eine Power-Reverierung durch Reib-Schlupfbetrieb der Kupplungen Kᵥ und K_{R} begonnen werden kann;
V_{R, max} die maximale Fahrzeuggeschwindigkeit (vorwärts oder rückwärts), bei welcher eine Power-Reversierung durch Reib-Schlupfbetrieb der Kupplungen Kᵥ und K_{R} gestartet werden kann. Der Reversiervorgang ist in Fig. 3 in die Bereiche I, II, III, IV, V, VI und VII eingeteilt.

### 5.1. Sollverlauf der Übersetzung der Transmission 2 beim Reversieren.

Der in Fig. 3 dargestellte Soll-Übersetzungsverlauf wird nur in den Reversierbereichen I, IV-VII durch die vorhandene Regelungseinrichtung der Steuereinrichtung 16 eingestellt. Hierbei wird angenommen, daß eine Reversierung von Vorwärtsfahrt nach Rückwärtsfahrt stattfindet, der gleiche Übersetzungsverlauf ergibt sich jedoch auch bei einer Reversierung von Rückwärtsfahrt auf Vorwärtsfahrt. In den Bereichen II und III wird mittels automatischer Ansteuerung der Kupplungen K_{V} und/oder K_{R} durch die Steuereinrichtung 16 ein Moment erzeugt, welches bei gleichbleibenden äußeren Bedingungen (z.B. keine Fahrwiderstands-Änderungen) einen qualitativ ähnlichen Verlauf wie die dargestellte Kurve von Fig. 3 hat.

In der folgenden Tabelle wird der Reversiervorgang mit Bezug auf die einzelnen Reversierbereiche I-VII und die Geschwindigkeitsbereiche GB I und GB II beschrieben:

| **Reversierbereich** | **Geschwindigkeitsbereich** | **Kurzbeschreibung** |
|---|---|---|
| RB I | GB I | Verzögerung der Fahrzeuggeschwindigkeit durch geregeltes und gesteuertes Zurückschalten der Übersetzung i der Transmission 2 |
| RB II | GB II | Übernahme des alten und Einstellen des neuen Fahrzeug-Verzögerungsmomentes von der Kupplung der alten Fahrtrichtung auf die Kupplung der neuen Fahrtrichtung (Kᵥ, K_{R}); der Motor 20 geht gegebenenfalls vom Schubbetrieb in den Zugbetrieb über |
| RB III | GB III | Aufrechterhaltung der Verzögerung/Beschleunigung |
| RB IV | GB IV | Die das Drehmoment übernehmende neue Kupplung (z.B. K_{R}) beendet im Zeitpunkt "x" ihren Reibungs-Schlupfbetrieb, d. h. sie wird vollständig geschlossen; das Kupplungsmoment wird von der Hochschaltung der Transmission aufgebracht |
| RB V | GB V | Aufrechterhaltung der Fahrzeugbeschleunigung |
| RB VI | GB VI | Abbau der Beschleunigung des Fahrzeuges |
| RB VII | GB VII | Einregeln von i_{Rez, Soll,} d. h. der Soll-Übersetzung und der Soll-Fahrzeuggeschwindigkeit |

### 6. Parametrierung der Kupplungs-Ansteuerung

Fig. 4 zeigt im oberen Diagramm parametrierbare Kupplungs-Ansteuerungskennlinien und im unteren Diagramm die dazu korrespondierenden Drehmomente, welche von der zugeschalteten Kupplung K_{R} (oder Kᵥ) der neuen Fahrtrichtung übertragen werden. Das obere Diagramm zeigt die Zeit t auf der Horizontalachse und die Kupplungs-Schließdrücke "P" auf der Vertikalachse. Das untere Diagramm zeigt die Zeit t auf der Horizontalachse und das korrespondierende übertragene Drehmoment "M" der neuen Kupplung (K_{R} oder K_{V}).

Der Kupplungsschließdruck der alten Fahrtrichtungs-Kupplung "FRK, alt" (Kᵥ oder K_{R}) ist in gestrichelten Linien und der Kupplungs-Schließdruck der neuen Kupplung "FRK, neu" (K_{R} oder Kᵥ) der neuen Fahrtrichtung ist in ausgezogenen Linien dargestellt. Zeitlich vor dem Kupplungsdruck, der an der neuen Kupplung "FRK, neu" eine Momentübertragung bewirkt, ist der Hydraulikdruck P_{F} der Hydraulikflüssigkeit dargestellt, mit welcher die neue Kupplung gefüllt wird. Aus dem oberen Diagramm von Fig. 4 ist ersichtlich, daß die Kupplungs-Befüllungsphase P_{F} der neuen Kupplung "FRK, neu" stattfindet, während der Kupplungsschließdruck der alten Kupplung "FRK, alt" abgebaut wird, jedoch bevor diese alte Kupplung vom vollständig geschlossenen Zustand in Reibungs-Schlupfbetrieb zum Zeitpunkt tₛ bei einem Kupplungsschließdruck P_{Kupp,ÜB} übergeht. Ungefähr zeitgleich zu diesem Zeitpunkt tₛ wird die neue Kupplung "FRK, neu" so weit geschlossen, daß ihre Kupplungsscheiben mit Reibschlupf arbeiten. Bis zum weiteren Zeitpunkt t_{Üb} wird der Schließdruck der alten Kupplung "FRK, alt" soweit abgebaut, daß sie vollständig öffnet und ihre Kupplungsscheiben keinen Reibschlupf mehr haben, während gleichzeitig der Kupplungsschließdruck der neuen Kupplung "FRK, neu" soweit erhöht wurde, daß sie das gesamte Drehmoment übernimmt, jedoch weiterhin mit Reibschlupf arbeitet. Im Bereich A zwischen den genannten beiden Zeitpunkten tₛ und t_{Üb} wird das zu übertragende Drehmoment in möglichst kurzer Zeit von der alten auf die neue Kupplung übertragen. Im folgenden Bereich B zwischen den Zeitpunkten t_{Üb} und t_{End} wird in der neuen Kupplung das zum Reversieren gewünschte, von einem Fahrerwunsch abgeleitete, Drehmoment aufgebaut. In dem sich daran anschließenden Bereich C wird das Drehmoment im wesentlichen konstant gehalten. Eine schwache Steigung oder Rampe des Kupplungsdruckes dient bei Bedarf zur Reibwertkompensation. Wenn die elektronische Steuereinrichtung 16 die Synchronität der beiden Kupplungsscheiben der neuen Kupplung "FRK, neu" (K_{V} oder K_{R}) feststellt, wird der Kupplungsdruck in Form einer steileren Rampe im Bereich D auf den entgültigen Systemdruck gebracht. Alternativ dazu kann der Kupplungsschließdruck zunächst mittels einer mäßig steilen Rampe erhöht werden, bis die Kupplungsscheiben entgültig haften. Nach dem entgültigen Haften der Kupplungsscheiben wird der Druck zügig auf Systemdruck erhöht. Zur sicheren Vermeidung eines Ruckes beim Übergang von der Reversierung durch Kupplungs-Reibschlupf zur Reversierung durch Übersetzungsverstellung der Transmission 2 mittels des Hydrostaten 26, 28, kann die anfängliche Änderung der Übersetzungsverstellung automatisch aus dem jeweils aktuellen Kupplungs-Drehmoment bestimmt werden.

Verblocken des Wendegetriebes:
Zum Verblocken des Wendegetriebes 22 schließt die Steuereinrichtung 16 beide Wende-Kupplungen Kᵥ und K_{R} simultan. Daduch wird das Fahrzeug zum Stillstand abgebremst, falls es in Bewegung war, und der Fahrantriebsstrang wird dadurch verblockt. Ein Belasten des Motors wird verhindert, indem an der stufenlosen Transmission 2 die Übersetzung unendlich eingestellt wird oder ein Koppelelement den Kraftfluß vom Motor unterbricht.

### 7. Reversieren über die Fahrtrichtungs-Kupplungen oberhalb der Grenzgeschwindigkeit V_{R,max}

In Fig. 5 ist ein Reversiervorgang oberhalb V_{R,max} über die Fahrtrichtungs-Kupplungen aufgezeigt.

Nach dem Reversierbefehl beginnt das Getriebe die Übersetzung anzuheben. Die Abtriebsdrehzahl der Planetenwalze sinkt, sofern die Antriebsdrehzahl konstant gehalten wird und der Motor geht in den Schubbetrieb. Der Druck an der aktuellen Richtungskupplung vorwärts wird zurückgefahren, bis die Kupplung kontrolliert in den Schlupf übergeht. Die Abtriebsdrehzahl ω_{ab} eilt der Antriebsdrehzahl ωᵥ, kontrolliert über den Kupplungsdruck und die Übersetzungsverstellung, voraus. Die erzeugte Reibleistung wird über die begrenzte Differenzdrehzahl Δω eingeschränkt. ωᵥ folgt der Vorgaberichtung und das Fahrzeug wird bei rutschender Richtungskupplung abgebremst. Die Getriebeübersetzung wird von der Steuereinrichtung 16 permanent automatisch angepaßt, damit die Differenzdrehzahl Δω einen vorgegebenen Wert nicht übersteigt und somit eine zu hohe Reibleistung und eine damit verbundene Überhitzung der Kupplungen verhindert wird.

Bereichsschaltungen in der Planetenwalze werden bei rutschender Kupplung ausgeführt und mögliche Drehzahlschwankungen ω_{ab} erreichen das Fahrzeugrad nicht. Schaltungen über mehrere Bereiche hinweg können somit ohne Komforteinbußen ausgeführt werden. Zusätzlich werden mögliche mechanische Schwingungen im Antriebsstrang gedämpft.

Ist der Umschaltpunkt erreicht (an diesem Punkt ist das Δω der neuen Richtungskupplung rückwärts ausreichend klein, um eine thermische Überlastung zu vermeiden), wird der aktuelle Kupplungsdruck der Richtungskupplung vorwärts als Referenzdruck für die Ansteuerung der Richtungskupplung rückwärts verwendet. Das erzeugte Moment hat damit ähnliche Größe und ein komfortables Umschalten auf die neue Kupplung bei konstanter Verzögerung ist möglich.

Wie beim Abbremsen des Fahrzeugs über die Vorwärtskupplung, erfolgt die weitere Beschleunigung bei rutschender Richtungskupplung und Bereichsschaltungen können komfortabel ausgeführt werden. Schließt die Kupplung, wird der Reversiervorgang über Übersetzungsverstellung abgeschlossen.

Alternativ zu dieser Vorgehensweise wird das an der neuen Fahrtrichtungs-Kupplung einzustellende Drehmoment unter Einbeziehung des mathematischen Getriebemodells aus der eingeregelten Übersetzungsänderung und aus dem Getriebeeingangsmoment berechnet.

### Bezugszeichen

- Kᵥ: Vorwärtsfahrt-Kupplung
- K_{R}: Rückwärtsfahrt-Kupplung

- 2: Transmission;
hydrostatisch-mechanisches Leistungsverzweigungsund Leistungssummierungsgetriebe
- 4: Gehäuse
- 6: mechanischer Leistungszweig
- 8: hydrostatischer Leistungszweig
- 10: Haupt-Antriebswelle
- 12: Planetenradsatz
- 14: Gangschaltgetriebe
- 16: Steuereinrichtung
- 18: Abtriebswelle der Transmission 2
- 20: Motor
- 22: Wendegetriebe
- 24: Haupt-Abtriebswelle
- 26: verstellbare Hydrostatikpumpe
- 28: Hydrostatikmotor
- 30: Getriebezweig
- 32: Getriebezweig
- 34: Aggregat (PTO)
- 36: Fahrtrichtungs-Wählelement
- 38: Übersetzungs-Einstellelement

## Patentansprüche

1. Verfahren zur Steuerung eines KraftfahrzeugAntriebsstranges, welcher eine Transmission (2) mit stufenlos variabler Übersetzung, ein Wendegetriebe (22), je mindestens eine wahlweise aktuierbare Kupplung (Kᵥ) für Vorwärtsfahrt und eine Kupplung (K_{R}) für Rückwärtsfahrt, und eine Steuereinrichtung (16) zum automatischen Reversieren der Fahrtrichtung aufweist, wobei automatisch eine Reversierung der Fahrtrichtung von Vorwärtsfahrt auf Rückwärtsfahrt oder von Rückwärtsfahrt auf Vorwärtsfahrt durchgeführt wird, wenn dies von einer Person an der Steuereinrichtung (16) angewählt wird, wobei eine angewählte Reversierung bei einer Fahrgeschwindigkeit oberhalb einer vorbestimmten Grenzgeschwindigkeit (V_{R,max}) nach folgenden Verfahrensschritten automatisch durchgeführt wird und die Steuereinrichtung den ersten Verfahrensschritt 1.1. automatisch überspringt und zum zweiten Verfahrensschritt 1.2. geht, wenn bei Wahl einer Fahrtrichtungs-Reversierung die Fahrzeuggeschwindigkeit bei oder unter der Grenzgeschwindigkeit (V_{R,max}) liegt:
1.1. Reduzieren der Fahrgeschwindigkeit durch stufenlos geregeltes und gesteuertes Erhöhen der Übersetzung der Transmission auf eine niedrigere Fahrgeschwindigkeit,
1.2. bei Erreichen oder Unterschreiten der Grenzgeschwindigkeit (V_{R,max}) automatisch die bisher geöffnete Kupplung der neuen Fahrtrichtung druckmoduliert in Reibschlupf gebracht wird und, sich mit diesem Reibschlupfbetrieb zeitlich überschneidend, die schlupffrei geschlossene Kupplung der alten Fahrtrichtung durch Schließdruckreduzierung druckmoduliert ebenfalls in Reibschlupfbetrieb gebracht wird, so daß das Antriebsdrehmoment unterbrechungsund ruckfrei von der alten Kupplung auf die neue Kupplung übertragen wird,
1.3. nach vollständigem Öffnen der alten Kupplung, so daß sie keinen Reibschlupf mehr hat, automatisch den Reib-schlupfbetrieb der Kupplung der neuen Fahrtrichtung solange beibehalten wird, bis dadurch das Fahrzeug auf Stillstand abgebremst und in der neuen Fahrtrichtung so weit beschleunigt wurde, bis die angetriebene Seite und die abgetriebene Seite der Kupplung der neuen Fahrtrichtung Synchronlauf erreicht haben,
1.4. nach Erreichen des Synchronlaufes der treibenden Kupplungsseite und der getriebenen Kupplungsseite der neuen Fahrtrichtung der Schließdruck dieser neuen Kupplung bis zum Systemdruck erhöht wird, bei welchem kein Schlupfbetrieb in dieser Kupplung mehr auftreten kann.

2. Verfahren nach Anspruch 1, **dadurch gekennzeichnet, daß** während des Reversiervorganges, solange die neue und/oder die alte Kupplung mit Reibschlupf arbeitet, die Übersetzung der Transmission konstant gehalten wird.

3. Verfahren nach Anspruch 1 oder 2, **dadurch gekennzeichnet, daß** die Kupplung der neuen Fahrtrichtung automatisch bereits dann mit Betätigungsflüssigkeit gefüllt wird, während die Fahrzeuggeschwindigkeit durch geregeltes und gesteuertes Erhöhen der Übersetzung der Transmission verzögert wird.

4. Verfahren nach einem der Ansprüche 1 bis 3, **dadurch gekennzeichnet, daß** der Schließdruck der Kupplung der alten Fahrtrichtung automatisch bereits dann reduziert wird, während die Transmission durch Herunterschalten ihrer Übersetzung die Fahrzeuggeschwindigkeit reduziert.

5. Verfahren nach einem der Ansprüche 1 bis 4, **dadurch gekennzeichnet, daß** die Transmission, nachdem die Kupplung der neuen Fahrtrichtung schlupffrei arbeitet, automatisch und mit ruckfreien Übergang hochgeschaltet wird, bis das Fahrzeug eine vorbestimmte Soll-Geschwindigkeit erreicht hat, welches die Soll-Geschwindigkeit der alten Fahrtrichtung vor Wählen eines Reversiervorganges oder eine danach gewählte Soll-Geschwindigkeit ist.

6. Verfahren nach einem der vorhergehenden Ansprüche, **dadurch gekennzeichnet, daß** die Motordrehzahl eines den Antriebsstrang antreibenden Motors während des Reibschlupfbetriebes der einen und/oder der anderen der beiden Kupplungen während der Fahrtrichtungs-Reversierung von der Steuereinrichtung automatisch konstant oder nur in einem engen Drehzahlbereich veränderbar gehalten wird.

7. Vorrichtung zur Steuerung eines Kraftfahrzeug-Antriebsstranges, welcher eine Transmission (2) mit stufenlos variabler Übersetzung, ein Wendegetriebe (22), je mindestens eine wahlweise aktuierbare Kupplung (KV) für Vorwärtsfahrt und eine Kupplung (KR) für Rückwärtsfahrt, und eine Steuereinrichtung (16) zum automatischen Reversieren der Fahrtrichtung aufweist, wobei automatisch eine Reversierung der Fahrtrichtung von Vorwärtsfahrt auf Rückwärtsfahrt oder von Rückwärtsfahrt auf Vorwärtsfahrt durchgeführt wird, wenn dies von einer Person an der Steuereinrichtung angewählt wird, wobei eine angewählte Reversierung bei einer Fahrgeschwindigkeit oberhalb einer vorbestimmten Grenzgeschwindigkeit (V_{R,max}) nach folgenden Verfahrensschritten automatisch durchgeführt wird und die Steuereinrichtung (16) den ersten Verfahrensschritt 7.1. automatisch überspringt und zum zweiten Verfahrensschritt 7.2. geht, wenn bei Wahl einer Fahrtrichtungs-Reversierung die Fahrzeuggeschwindigkeit bei oder unter der Grenzgeschwindigkeit (V_{R,max}) liegt:
7.1. Reduzieren der Fahrgeschwindigkeit durch stufenlos geregeltes und gesteuertes Erhöhen der Übersetzung der Transmission (2) auf eine niedrigere Fahrgeschwindigkeit,
7.2 bei Erreichen oder Unterschreiten der Grenzgeschwindigkeit (V_{R,max}) automatisch die bisher geöffnete Kupplung der neuen Fahrtrichtung druckmoduliert in Reibschlupf gebracht wird und, sich mit diesem Reibschlupfbetrieb zeitlich überschneidend, die schlupffrei geschlossene Kupplung der alten Fahrtrichtung durch Schließdruckreduzierung ebenfalls in Reibschlupf gebracht wird, so daß das Antriebsdrehmoment unterbrechungs- und ruckfrei von der alten Kupplung auf die neue Kupplung übertragen wird,
7.3. nach vollständigem Öffnen der alten Kupplung, so daß sie keinen Reibschlupf mehr hat, automatisch der Reib-schlupfbetrieb der Kupplung der neuen Fahrtrichtung solange beibehalten wird, bis dadurch das Fahrzeug auf Stillstand abgebremst und in der neuen Fahrtrichtung so weit beschleunigt wurde, bis die angetriebene Seite und die abgetriebene Seite der Kupplung der neuen Fahrtrichtung Synchronlauf erreicht haben,
7.4. nach Erreichen des Synchronlaufes der treibenden Kupplungsseite und der getriebenen Kupplungsseite der neuen Fahrtrichtung der Schließdruck dieser neuen Kupplung bis zum Systemdruck erhöht wird, bei welchem kein Schlupfbetrieb in dieser Kupplung mehr auftreten kann.

8. Vorrichtung nach Anspruch 7, **dadurch gekennzeichnet, daß** während des Reversiervorganges, solange die neue und/oder die alte Kupplung mit Reibschlupf arbeitet, die Übersetzung der Transmission (2) konstant gehalten wird.

9. Vorrichtung nach Anspruch 7 oder 8, **dadurch gekennzeichnet, daß** die Kupplung der neuen Fahrtrichtung automatisch bereits dann mit Betätigungsflüssigkeit gefüllt wird, während die Fahrzeuggeschwindigkeit durch geregeltes und gesteuertes Herunterschalten der Übersetzung der Transmission (2) verzögert wird.

10. Vorrichtung nach einem der Ansprüche 7 bis 9, **dadurch gekennzeichnet, daß** der Schließdruck der Kupplung der alten Fahrtrichtung automatisch bereits dann reduziert wird, während die Transmission (2) durch Herunterschalten ihrer Übersetzung die Fahrzeuggeschwindigkeit reduziert.

11. Vorrichtung nach einem der Ansprüche 7 bis 10, **dadurch gekennzeichnet, daß** die Transmission (2), nachdem die Kupplung der neuen Fahrtrichtung schlupffrei arbeitet, automatisch und mit ruckfreiem Übergang hochgeschaltet wird, bis das Fahrzeug eine vorbestimmte Soll-Geschwindigkeit erreicht hat, welches die Soll-Geschwindigkeit der alten Fahrtrichtung vor Wählen eines Reversiervorganges oder eine danach gewählte neue Sollgeschwindigkeit ist.

12. Vorrichtung nach einem der Ansprüche 7 bis 11, **dadurch gekennzeichnet, daß** die Motordrehzahl eines den Antriebsstrang antreibenden Motors (20) während des Reibschlupfbetriebes der einen und/oder der anderen der beiden Kupplungen (K_{V}, K_{R}) während der Fahrtrichtungs-Reversierung von der Steuereinrichtung (16) automatisch konstant oder nur in einem engen Drehzahlbereich veränderbar gehalten wird.

13. Verfahren zur Steuerung eines Kraftfahrzeug-Antriebsstranges, welcher eine Transmission (2) mit stufenlos variabler Übersetzung, ein Wendegetriebe (22), je mindestens eine wahlweise aktuierbare Kupplung (Kᵥ) für Vorwärtsfahrt und eine Kupplung (K_{R}) für Rückwärtsfahrt und eine Steuereinrichtung (16) zum automatischen Reversieren der Fahrtrichtung aufweist, wobei automatisch eine Reversierung der Fahrtrichtung von Vorwärtsfahrt auf Rückwärtsfahrt oder von Rückwärtsfahrt auf Vorwärtsfahrt durchgeführt wird, wenn dies von einer Person an der Steuereinrichtung (16) angewählt wird, wobei eine angewghlte Reversierung bei einer Fahrgeschwindigkeit oberhalb einer vorbestimmten Grenzgeschwindigkeit (V_{R,max}) nach folgenden Verfahrensschritten automatisch durchgeführt wird:
13.1. Anheben der Getriebeübersetzung und druckmoduliertes Schließen der bisher geöffneten Kupplung der neuen Fahrtrichtung, so daß sie in den Reibschlupfbetrieb gebracht wird und zeitlich überschneidend die schlupffrei geschlossene Kupplung der alten Fahrtrichtung, durch Schließdruckreduzierung druckmoduliert, ebenfalls in Reib-schlupfbetrieb gebracht wird.
13.2. Permanentes Variieren der Übersetzung des Getriebes, daß eine parametrierbare maximale Drehzahldifferenz zwischen der Antriebsseite und der Abtriebsseite der Kupplungsvorrichtung nicht überschritten wird, indem die Reibleistung der Kupplungen laufend berechnet und mit den zulässigen Werten verglichen wird und somit die Drehzahldifferenz den maximalen Wert nicht übersteigt.
13.3. Der Reibschlupf wird so lange beibehalten, bis das Fahrzeug auf Stillstand abgebremst und in der neuen Fahrtrichtung so weit beschleunigt wurde, bis die angetriebene Seite und die abgetriebene Seite der Kupplung der neuen Fahrtrichtung Synchronlauf erreicht haben.
13.4. Nach Erreichen des Synchronlaufes der treibenden Kupplungsseite und der getriebenen Kupplungsseite der neuen Fahrtrichtung wird der Schließdruck dieser neuen Kupplung bis zum Systemdruck erhöht, bei welchem kein Schlupfbetrieb in dieser Kupplung mehr auftreten kann.

14. Verfahren nach einem der Ansprüche 1 bis 6 und 13, **dadurch gekennzeichnet, daß** die automatische Beeinflussung der Reibleistung der Kupplungsvorrichtung, welche durch Variieren der Übersetzung des Getriebes erfolgt, einem Kupplungsbetätigungsdruck überlagert wird, welcher in der Kupplungsvorrichtung zur Fahrtrichtungs-Änderung des Kraftfahrzeugs in Abhängigkeit von einer vom Fahrer an einer Fahrtrichtungs-Wählvorrichtung gewählten Fahrtrichtungs-Änderung automatisch erzeugt wird, wobei die Kupplungsvorrichtung mindestens eine Kupplung für Vorwärtsfahrt und mindestens eine Kupplung für Rückwärtsfahrt aufweist.

## Claims

1. Method for controlling a motor vehicle drive train, which has a transmission (2) with a steplessly variable transmission ratio, a reversing gearbox (22), at least one optionally actuatable clutch (K_{V}) for forward travel and one clutch (K_{R}) for reverse travel, and a control device (16) for automatic reversing of the direction of travel, reversing of the direction of travel from forward travel to reverse travel or from reverse travel to forward travel being carried out automatically if this is selected by a person at the control device (16), a selected reversal being carried out automatically according to the following method steps at a driving speed above a predetermined limit speed (V_{R,max}) and the control device automatically skipping the first method step 1.1 and going to the second method step 1.2 if on selecting a reversal of the direction of travel the vehicle speed is at or below the limit speed (V_{R,max}) :
1.1 Reduction of the driving speed by means of steplessly adjusted and controlled increasing of the transmission ratio of the transmission to a lower driving speed,
1.2 on reaching or falling below the limit speed (V_{R,max}), the clutch of the new direction of travel that was previously open is brought pressure-modulately into friction slip and, overlapping timewise with this friction-slip mode, the clutch of the old travel direction that is closed in a non-slip manner is likewise brought pressure-modulatedly into friction-slip mode by reduction of the closing pressure, so that the drive torque is transmitted without interruption or jerking from the old clutch to the new clutch,
1.3 following complete opening of the old clutch, so that it no longer has any friction slip, the friction-slip mode of the clutch of the new direction of travel is maintained automatically until the vehicle is braked thereby to a stop and accelerated in the new direction of travel until the driven side and the output side of the clutch of the new direction of travel have reached synchronous running,
1.4 on attaining synchronous running of the driving clutch side and the driven clutch side of the new direction of travel, the closing pressure of this new clutch is increased up to system pressure, at which no further slipping operation can occur in this clutch.

2. Method according to claim 1, **characterized in that**, during the reversing process, as long as the new and/or old clutch operates with friction slip, the transmission ratio of the transmission is kept constant.

3. Method according to claim 1 or 2, **characterized in that** the clutch of the new direction of travel is being filled automatically with actuating fluid while the vehicle speed is being decelerated by adjusted and controlled increasing of the transmission ratio of the transmission.

4. Method according to one of claims 1 to 3, **characterized in that** the closing pressure of the clutch of the old direction of travel is automatically being reduced while the transmission is reducing the vehicle speed by changing down of its transmission ratio.

5. Method according to one of claims 1 to 4, **characterized in that** the transmission, once the clutch of the new direction of travel is operating in a non-slip manner, is changed up automatically and with a jerk-free transition until the vehicle has reached a predetermined target speed, which is the target speed of the old direction of travel prior to selection of a reversing process or a target speed selected thereafter.

6. Method according to one of the preceding claims, **characterized in that** the motor speed of a motor driving the drive train is kept by the control device automatically constant or only variable in a narrow speed range during the friction-slip operation of one and/or the other of the two clutches during reversal of the direction of travel.

7. Device for controlling a motor vehicle drive train, which has a transmission (2) with a steplessly variable transmission ratio, a reversing gearbox (22), at least one optionally actuatable clutch (K_{V}) for forward travel and one clutch (K_{R}) for reverse travel, and a control device (16) for automatic reversal of the direction of travel, a reversal of the direction of travel from forward travel to reverse travel or from reverse travel to forward travel being carried out automatically if this is selected by a person at the control device (16), a selected reversal being carried out automatically according to the following method steps at a driving speed above a predetermined limit speed (V_{R,max}) and the control device (16) automatically skipping the first method step 7.1 and going to the second method step 7.2 if on selecting a reversal of the direction of travel the vehicle speed is at or below the limit speed (V_{R,max}) :
7.1 Reduction of the driving speed by means of steplessly adjusted and controlled increasing of the transmission ratio of the transmission (2) to a lower driving speed,
7.2 on reaching or falling below the limit speed (V_{R,max}), the clutch of the new direction of travel that was previously open is automatically brought pressure-modulately into friction slip and, overlapping timewise with this friction-slip mode, the clutch of the old travel direction that is closed in a non-slip manner is likewise brought into friction-slip mode by closing pressure reduction, so that the drive torque is transmitted without interruption or jerking from the old clutch to the new clutch,
7.3 following complete opening of the old clutch, so that it no longer has any friction slip, the friction-slip mode of the clutch of the new direction of travel is maintained automatically until the vehicle is braked thereby to a stop and accelerated in the new direction of travel until the driven side and the output side of the clutch of the new direction of travel have reached synchronous running,
7.4 on attaining synchronous running of the driving clutch side and the driven clutch side of the new direction of travel, the closing pressure of this new clutch is increased up to system pressure, at which no further slipping operation can occur in this clutch.

8. Device according to claim 7, **characterized in that**, during the reversing process, as long as the new and/or old clutch operates with friction slip, the transmission ratio of the transmission (2) is kept constant.

9. Device according to claim 7 or 8, **characterized in that** the clutch of the new direction of travel is being filled automatically with actuating fluid while the vehicle speed is being decelerated by adjusted and controlled changing down of the transmission ratio of the transmission (2).

10. Device according to one of claims 7 to 9, **characterized in that** the closing pressure of the clutch of the old direction of travel is automatically being reduced while the transmission (2) is reducing the vehicle speed by changing down of its transmission ratio.

11. Device according to one of claims 7 to 10, **characterized in that** the transmission (2), once the clutch of the new direction of travel is operating in a non-slip manner, is changed up automatically and with a jerk-free transition until the vehicle has reached a predetermined target speed, which is the target speed of the old direction of travel prior to selection of a reversing process or a new target speed selected thereafter.

12. Device according to one of claims 7 to 11, **characterized in that** the motor speed of a motor (20) driving the drive train is kept by the control device (16) automatically constant or only variable in a narrow speed range during the friction-slip operation of one and/or the other of the two clutches (K_{V}, K_{R}) during reversal of the direction of travel.

13. Method for controlling a motor vehicle drive train, which has a transmission (2) with a steplessly variable transmission ratio, a reversing gearbox (22), at least one optionally actuatable clutch (K_{V}) for forward travel and one clutch (K_{R}) for reverse travel, and a control device (16) for automatic reversal of the direction of travel, reversal of the direction of travel from forward travel to reverse travel or from reverse travel to forward travel being carried out automatically if this is selected by a person at the control device (16), a selected reversal being carried out automatically according to the following method steps at a driving speed above a predetermined limit speed (V_{R,max}) :
13.1 Increasing of the gearbox transmission ratio and pressure-modulated closing of the clutch of the new direction of travel that was open previously, so that it is brought into friction-slip mode, and overlapping timewise the clutch of the old direction of travel that was closed in a non-slip manner is likewise brought into friction-slip mode pressure-modulatedly by reduction of the closing pressure.
13.2 Permanent variation of the transmission ratio of the gearbox, that a parameterizable maximum speed difference between the drive side and the output side of the clutch device is not exceeded, in that the friction capacity of the clutches is calculated continuously and compared with the permitted values and thus the speed difference does not exceed the maximum value.
13.3 The friction slip is maintained until the vehicle is braked to a stop and accelerated in the new direction of travel until the driven side and the output side of the clutch of the new direction of travel have reached synchronous running.
13.4 On attaining synchronous running of the driving clutch side and the driven clutch side of the new direction of travel, the closing pressure of this new clutch is increased up to system pressure, at which no further slip mode can occur in this clutch.

14. Method according to one of claims 1 to 6 and 13, **characterized in that** the automatic influencing of the friction capacity of the clutch device, which is effected by varying the transmission ratio of the gearbox, is overlaid by a clutch actuating pressure, which is generated automatically in the clutch device for changing the direction of travel of the motor vehicle depending on a change of travel direction selected by the driver at a direction of travel selection device, the clutch device having at least one clutch for forward travel and at least one clutch for reverse travel.

## Revendications

1. Procédé pour la commande d'une chaîne cinématique de véhicule automobile qui comprend une transmission (2) à rapport variable en continu, une boîte de renversement de marche (22), au moins un embrayage (Kᵥ) pouvant être actionné sélectivement pour la marche avant et un embrayage (K_{R}) pour la marche arrière, et un dispositif de commande (16) pour l'inversion automatique du sens de marche, dans lequel une inversion du sens de marche pour passer de la marche avant à la marche arrière ou de la marche arrière à la marche avant est exécutée automatiquement lorsque cela est sélectionné par une personne sur le dispositif de commande (16), une inversion sélectionnée en présence d'une vitesse de marche supérieure à une vitesse limite prédéterminée (V_{R,max}) étant exécutée automatiquement selon les étapes de procédé suivantes et le dispositif de commande sautant automatiquement la première étape de procédé 1.1. et passant à la deuxième étape de procédé 1.2. lorsque, au moment de la sélection de l'inversion du sens de marche, la vitesse du véhicule se trouve à la vitesse limite (V_{R,max}) ou au-dessous de celle-ci :
1.1. réduire la vitesse de marche par élévation réglée par variation continue et commandée du rapport de la transmission pour donner une vitesse de marche plus basse,
1.2. lorsqu'on atteint la vitesse limite (V_{R,max}) ou qu'on passe au-dessous de cette vitesse, l'embrayage du nouveau sens de marche, qui était ouvert jusqu'à présent, est mis en glissement à frottement avec modulation de la pression et, s'entrecoupant chronologiquement avec ce fonctionnement avec glissement à frottement, l'embrayage de l'ancien sens de marche, qui était fermé sans glissement, est lui aussi mis en fonctionnement avec glissement à frottement avec modulation de la pression, par une réduction de la pression de fermeture, de sorte que le couple d'entraînement est transféré de l'ancien embrayage au nouvel embrayage sans interruption et sans à-coup,
1.3. après l'ouverture totale de l'ancien embrayage, de sorte que celui-ci n'a plus de glissement à frottement, le fonctionnement avec glissement à frottement de l'embrayage du nouveau sens de marche est automatiquement maintenu jusqu'à ce que le véhicule soit freiné jusqu'à l'arrêt et qu'il soit suffisamment accéléré dans le nouveau sens de marche pour que le côté entraîné et le côté entraînant de l'embrayage du nouveau sens de marche aient atteint la marche synchrone.
1.4. lorsqu'on a atteint la marche synchrone du côté entraînant de l'embrayage et du côté entraîné de l'embrayage du nouveau sens de marche, la pression de fermeture de ce nouvel embrayage est augmentée jusqu'à la pression de système à laquelle il ne peut plus se produire de fonctionnement avec glissement dans cet embrayage.

2. Procédé selon la revendication 1, **caractérisé en ce que**, pendant l'opération d'inversion, aussi longtemps que le nouvel embrayage et/ou l'ancien embrayage travaillent avec glissement à frottement, le rapport de la transmission est maintenu constant.

3. Procédé selon la revendication 1 ou 2, **caractérisé en ce que** l'embrayage du nouveau sens de marche est déjà automatiquement rempli de liquide d'actionnement pendant que la vitesse du véhicule est décélérée par élévation réglée ou commandée du rapport de la transmission.

4. Procédé selon l'une des revendications 1 à 3, **caractérisé en ce que** la pression de fermeture de l'embrayage de l'ancien sens de marche est déjà réduite automatiquement pendant que la transmission réduit la vitesse du véhicule par rétrogradation de son rapport de transmission.

5. Procédé selon l'une des revendications 1 à 4, **caractérisé en ce que**, lorsque l'embrayage du nouveau sens de marche travaille maintenant sans glissement, la transmission est mise automatiquement et avec transition sans à-coup en montée du rapport jusqu'à ce que le véhicule ait atteint une vitesse de consigne prédéterminée qui est la vitesse de consigne de l'ancien sens de marche avant la sélection d'une opération d'inversion ou une vitesse de consigne sélectionnée par la suite.

6. Procédé selon l'une des revendications précédentes, **caractérisé en ce que**, pendant le fonctionnement avec glissement à frottement de l'un et/ou de l'autre des deux embrayages, la vitesse de rotation d'un moteur qui entraîne la chaîne cinématique est maintenue automatiquement constante, ou variable, par le dispositif de commande seulement dans une étroite plage de vitesses de rotation.

7. Dispositif pour la commande d'une chaîne cinématique de véhicule automobile qui comprend une transmission (2) à rapport variable en continu, une boîte de renversement de marche (22), au moins un embrayage (KV) pouvant être actionné sélectivement pour la marche avant et un embrayage (KR) pour la marche arrière, et un dispositif de commande (16) pour l'inversion automatique du sens de marche, dans lequel une inversion du sens de marche pour passer de la marche avant à la marche arrière, ou de la marche arrière à la marche avant, est exécutée automatiquement lorsque cela est sélectionné par une personne sur le dispositif de commande, une inversion sélectionnée en présence d'une vitesse de marche supérieure à une vitesse limite prédéterminée (V_{R,max}) étant exécutée automatiquement selon les étapes de procédé suivantes et le dispositif de commande (16) sautant automatiquement la première étape de procédé 7.1. et passant à la deuxième étape de procédé 7.2. lorsque, au moment de la sélection de l'inversion du sens de marche, la vitesse du véhicule se trouve à la vitesse limite (V_{R,max}) ou au-dessous de celle-ci :
7.1. réduire la vitesse de marche par élévation réglée par variation continue et commandée du rapport de la transmission (2) pour donner une vitesse de marche plus basse,
7.2. lorsqu'on atteint la vitesse limite (V_{R,max}) ou qu'on passe au-dessous de cette vitesse, l'embrayage du nouveau sens de marche, qui était ouvert jusqu'à présent, est mis en glissement à frottement, avec modulation de la pression, et en s'entrecoupant chronologiquement avec ce fonctionnement avec glissement à frottement, l'embrayage de l'ancien sens de marche, qui était fermé sans glissement, est lui aussi mis en fonctionnement avec glissement à frottement avec modulation de la pression, par une réduction de la pression de fermeture, de sorte que le couple d'entraînement est transféré de l'ancien embrayage au nouvel embrayage sans interruption et sans à-coup,
7.3. après l'ouverture totale de l'ancien embrayage, de sorte que celui-ci n'a plus de glissement à frottement, le fonctionnement avec glissement à frottement de l'embrayage du nouveau sens de marche est automatiquement maintenu jusqu'à ce que le véhicule soit freiné jusqu'à l'arrêt et qu'il soit suffisamment accéléré dans le nouveau sens de marche pour que le côté entraînant et le côté entraîné de l'embrayage du nouveau sens de marche aient atteint la marche synchrone,
7.4. lorsqu'on a atteint la marche synchrone du côté entraînant de l'embrayage et du côté entraîné de l'embrayage du nouveau sens de marche, la pression de fermeture de ce nouvel embrayage est augmentée jusqu'à la pression de système à laquelle il ne peut plus se produire de fonctionnement avec glissement dans cet embrayage.

8. Dispositif selon la revendication 7, **caractérisé en ce que**, pendant l'opération d'inversion, aussi longtemps que le nouvel embrayage et/ou l'ancien embrayage travaillent avec glissement à frottement, le rapport de la transmission (2) est maintenu constant.

9. Procédé selon la revendication 7 ou 8, **caractérisé en ce que** l'embrayage du nouveau sens de marche est déjà automatiquement rempli de liquide d'actionnement pendant que la vitesse du véhicule est décélérée par une rétrogradation réglée ou commandée du rapport de la transmission (2).

10. Dispositif selon l'une des revendications 7 à 9, **caractérisé en ce que** la pression de fermeture de l'embrayage de l'ancien sens de marche est déjà réduite automatiquement pendant que la transmission (2) réduit la vitesse du véhicule par rétrogradation de son rapport de transmission.

11. Dispositif selon l'une des revendications 7 à 10, **caractérisé en ce que**, lorsque que l'embrayage du nouveau sens de marche travaille maintenant sans glissement, la transmission (2) est mise automatiquement et avec transition sans à-coup en montée du rapport jusqu'à ce que le véhicule ait atteint une vitesse de consigne prédéterminée qui est la vitesse de consigne de l'ancien sens de marche avant la sélection d'une opération d'inversion ou une nouvelle vitesse de consigne sélectionnée par la suite.

12. Dispositif selon l'une des revendications 7 à 11, **caractérisé en ce que**, pendant le fonctionnement avec glissement à frottement de l'un et/ou de l'autre des deux embrayages (K_{V}, K_{R}), la vitesse de rotation d'un moteur (20) qui entraîne la chaîne cinématique est maintenue automatiquement constante, ou variable seulement dans une étroite plage de vitesses de rotation, par le dispositif de commande (16).

13. Procédé pour la commande d'une chaîne cinématique de véhicule automobile qui comprend une transmission (2) à rapport variable en continu, une boîte de renversement de marche (22), au moins un embrayage (Kᵥ) pouvant être actionné sélectivement pour la marche avant et un embrayage (K_{R}) pour la marche arrière, et un dispositif de commande (16) pour l'inversion automatique du sens de marche, dans lequel une inversion du sens de marche pour passer de la marche avant à la marche arrière, ou de la marche arrière à la marche avant, est exécutée automatiquement lorsque cela est sélectionné par une personne sur le dispositif de commande (16), une inversion sélectionnée en présence d'une vitesse de marche supérieure à une vitesse limite prédéterminée (V_{R,max}) étant exécutée automatiquement selon les étapes de procédé suivantes :
13.1. augmenter le rapport de la transmission et fermer l'embrayage du nouveau sens de marche qui était ouvert jusqu'à présent, de manière qu'il soit mis dans le fonctionnement avec glissement à frottement et, qu'en s'entrecoupant chronologiquement, l'embrayage de l'ancien sens de marche fermé sans glissement soit lui aussi mis en fonctionnement avec glissement à frottement, par réduction de la pression de fermeture avec modulation de la pression,
13.2. faire varier en permanence le rapport de la transmission de manière qu'on ne tombe pas au-dessous d'une différence de vitesse de rotation maximale paramétrable entre le côté d'entraînement et le côté sortie du dispositif d'embrayage, par le fait que la puissance de frottement des embrayages est calculée constamment et comparée aux valeurs admissibles et que, de cette façon, la différence de vitesse de rotation n'excède pas la valeur maximale,
13.3. le glissement à frottement est maintenu jusqu'à ce que le véhicule soit freiné jusqu'à l'arrêt et suffisamment accéléré dans le nouveau sens de marche pour que le côté d'entraînement et le côté sortie de l'embrayage du nouveau sens de marche aient atteint la marche synchrone.
13.4. lorsqu'on a atteint la marche synchrone du côté entraînant de l'embrayage et du côté entraîné de l'embrayage du nouveau sens de marche, la pression de fermeture de ce nouvel embrayage est augmentée jusqu'à la pression de système à laquelle il ne peut plus se produire de fonctionnement avec glissement dans cet embrayage.

14. Procédé selon l'une des revendications 1 à 6 et 13, **caractérisé en ce que** la modification automatique de la puissance de frottement du dispositif d'embrayage, qui est exécutée par la variation du rapport de la transmission, est superposée à une pression d'actionnement des embrayages qui, dans le dispositif d'embrayage destiné au changement de sens de marche du véhicule, est automatiquement produite par un changement du sens de marche sélectionné par le conducteur sur un dispositif de sélection du sens de marche, le dispositif d'embrayage comportant au moins un embrayage pour la marche avant et au moins un embrayage pour la marche arrière.
